# EUROPEAN PATENT APPLICATION

(11) **EP 2 826 605 A2**
(43) Date of publication of application: **21.01.2015**
(21) Application number: 14382263.3
(22) Date of filing: 09.07.2014
(51) Int. Cl.: B25J 9/16

(54) **Method for controlling the action of a robotic arm and robotic arm using that method**

(30) Priority: 15.07.2013 ES 201331074
(71) Applicant: Kiro Robotics S.L., 20500 Arrasate (ES)
(72) Inventor: Aguerre, Jean-Philippe, Itxassou 64250 (FR); Lizari Illarramendi, Borja, 01010 Vitoria-Gasteiz (ES); Telleria Garay, Naiara, 20500 Arrasate-Mondragon (ES); Amilibia Zubeldia, Ekhi, 20230 Legazpi (Guipuzcoa) (ES); Belloso Arsuaga, Amaia, 01160 Ibarra (Alava) (ES)
(74) Representative: Durán-Corretjer, S.L.P.

(57) **Abstract**

Method for controlling the action of a robotic arm which comprises the following stages: a) moving the robotic arm by means of an action programmed in a controller; b) measuring the force which the robotic arm applies at specific points in the movement in stage a); c) comparing the force applied at each of the points in stage b) with force profile data stored in the controller; d) as a result of the comparison in paragraph c), generating an alarm signal if the force measured in stage b) is outside the limits defined in the force profile and carrying out stage a) if the force measured in stage b) is within the limits defined in the force profile.

## Description

This invention relates to a method for controlling the force of a robotic arm and a robotic arm using that method. In particular this invention relates to a method for controlling the strength of robotic arms in pharmaceutical applications for the preparation of medicinal products.

Multiple mechanical devices for inclusion in one of the axes of robotic arms which make it possible to measure the force applied by the robot along those axes are known in the art and the provision of a mechanical obstacle which prevents movement when the force applied in the arm in question exceeds a threshold value is also known.

In addition to this, control algorithms to determine the movement of a robotic arm when it exceeds a particular threshold value of applied force are also known.

However in the particular application of the preparation of pharmaceutical medicinal products, it is not sufficient to determine force thresholds because for example the puncture force required to pass through the elastomer part of a bottle with a needle is a variable force and it is obvious that at the initial moment of puncture the force which has to be exerted is greater than that once it has passed through the elastomer part and the needle is within the bottle. The fact of having constant force thresholds to bring about this action does not provide any information about it, for example whether inappropriate puncture has occurred, whether the needle has broken or whether there is no needle in the syringe, because the robotic arm has insufficient information to determine whether the force being applied is a force for normal conditions; it only knows that if it exceeds a particular threshold it may damage the bottle.

The method according to this invention also makes it possible to determine if any element in the system (e.g. bottle, bag, needle, syringe) is missing and to determine whether a collision has occurred as a result of interference with another element in the system or external elements.

This method may be supplemented with sensors of another type, such as cameras, proximity detectors, weighing equipment, etc., to provide evidence that there is an abnormality in the procedure before the alarm signal is activated.

Document WO2012172418 describes a device and method for preparing medicinal products comprising robotic arms which can use the method of controlling force to which this invention relates. It will be seen that in the device described in WO2012172418 a mechanism for force control could be incorporated at least when puncturing the bottle to extract/insert liquids through a syringe, when a syringe is available on the weigh scale (in order to detect that there are no obstacles), on placing bottles on the distribution plate and removing them from it, etc.

It is therefore necessary to incorporate some method for measuring forces in robotic arms which is based not only on measurement and protection once a particular threshold value is exceeded but in addition has more information that can be used to control the action while it is in progress.

As a consequence this invention provides a method for controlling the action of a robotic arm which comprises dynamic limits appropriate for different points in a sequence of movements of a robot for a specific action, these dynamic limits being known as force profiles.

Surprisingly, through incorporating these force profiles, the robotic arm can determine whether a force is below or above normal operating conditions for a specific action, providing the robotic arm with the ability for self-diagnosis and alarms which cannot be obtained by means of fixed thresholds.

Specifically this invention relates to a method for controlling the action of a robotic arm, preferably robotic arms for preparing medicinal products, which instead of having a particular threshold has a force profile in which information on the force which the arm must exert under normal conditions is stored. In this way the force required at particular instants in order for the arm to perform an operation is specified and thus it is possible to detect when abnormalities occur in the process and take corrective action.

This invention therefore provides a method for controlling the action of a robotic arm comprising the following stages:
a) moving the robotic arms by means of a programmed action in a controller;
b) measuring the force which the robotic arm applies at particular points in the movement in stage a);
c) comparing the force exerted at each of the points in stage b) with force profile data stored in the controller;
d) as a result of the comparison in item c) generating an alarm signal if the force measured in stage b) is outside the limits defined in the force profile and performing stage a) if the force measured in stage b) lies within the limits defined in the force profile.

Preferably the force profile will comprise at least the maximum and/or minimum force which the robotic arm may exercise at a series of points in its movement.

In particular embodiments this invention measures the force in stage b) at specific points selected by repetitive sampling as a function of time (in milliseconds) or space (as a fraction of a millimetre) in the movement in stage a).

In addition to this the force profile may take the following forms, among others:
- Proportional: a typical force value is defined. Subsequently a tolerance is defined and only forces which remain within that range of tolerance are permitted.
- Integral: as the arm moves the force values in the vicinity of each point are integrated and a maximum value is given to that integration.
- Adaptive: through automatic learning algorithms the force profile is altered in accordance with the functioning of the device.

It is important to point out that these ways of determining the force are not mutually exclusive as combinations may also be used and these combinations will fall within the scope of protection of this invention.

Furthermore the alarm signal generated in stage b) may be configured so that it interrupts the movement of the robotic arm, so that it will go to an alarm position or, simply, so that it generates a message to the user indicating that an incorrect force has been applied for the type of action performed and that it is up to the user to define the action which must be taken.

In particular embodiments of this invention the controller will comprise a plurality of force profiles for different types of movement.

Preferably different actions performed by the robotic arm (such as withdrawing liquids from a bottle, the mixing of medicinal products, weighing a syringe) will have a specific force profile which defines the force which the arm must apply at a series of times. Each force profile will define the range of forces which may occur when the action is performed under normal conditions and these profiles will be stored, preferably in the controller.

In addition to this, this invention also provides a robotic arm comprising a controller in which a series of movements are stored, a graphic interface for selecting the sequence of movements which has to be performed and means for measuring the force applied by the arm, in which the controller comprises a memory in which different force profiles for different movements are stored.

Preferably these force profiles comprises at least data for the maximum and/or minimum force which has to be applied at specific points.

In addition to this the robotic arm according to this invention comprises the incorporation of a system for checking movements which is activated by an alarm signal. This alarm signal is preferably activated by means of a comparator which compares data for the force applied with force data in the force profiles.

For better understanding, drawings of a method of controlling the action of a robotic arm and the robotic arm are appended by way of an explanatory but not limiting example.
Figure 1 shows a diagram of a first force measurement in a robotic arm during a particular action.
Figure 2 shows a diagram of a second force measurement in a robotic arm carrying out the same action in Figure 1.

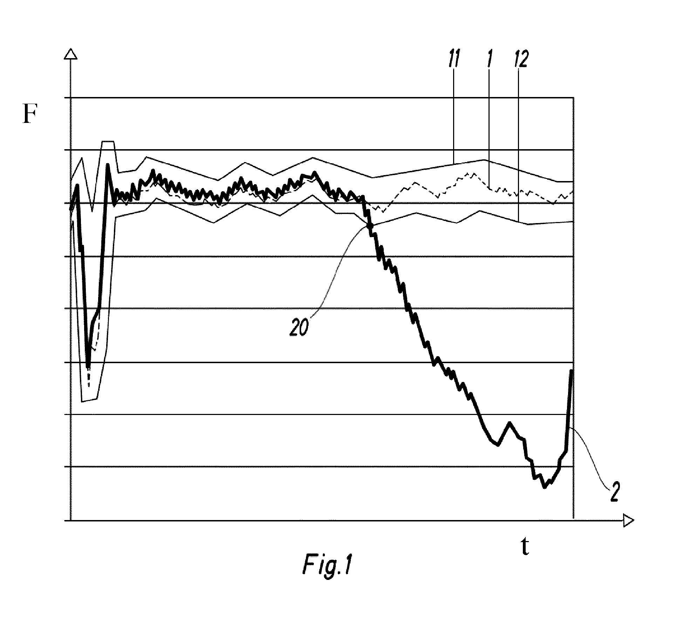

Figure 1 shows a diagram in which the steps of the robot are shown on the abscissa (t) and the force measured by at least one force sensor located on the robotic arm is illustrated along the ordinate (F).

In particular embodiments of this invention the abscissa may for example refer to time and this is to be regarded as forming part of the scope of protection of this invention.

In particular, Figure 1 shows on the one hand a first measurement -1- representing the force applied by the robot throughout the movement for a particular action. This first measurement represents the force applied by the robot at each of the instants in the action when a normal operation is performed, that is to say when no incident has occurred throughout the action.

Once various measurements have been made under normal operating conditions, a force profile which in this particular example comprises an upper limit -11- and a lower limit -12- is defined. However only one of the limits will be defined in particular embodiments of this invention.

This force profile is stored in a controller for the robotic arm. This controller for the robotic arm further comprises a comparator into which the force measured and the force profiles are entered and this comparator has the ability to determine whether the measured force is within the limits defined by the force profile or not.

Having a force profile which determines the range of forces applied by the robot in a specific action under normal operating conditions, it is possible to control the action of the robotic arm in such a way that movement steps are performed while measuring the force required to perform each of these steps. If the force lies within the limits defined by the force profile, it continues to the next step, and if not it emits an alarm signal to the operator so that the latter can visually check whether a fault has occurred or whether performance of the action can continue.

In specially preferred embodiments of this invention, if the arm applies a force outside the limits defined by the force profile the robotic arm will stop until a confirmation signal is issued.

In the example in Figure 1 it will be seen how that at point -20- the robotic arm applies a force less than that measured for that point under normal conditions. Also at this point -20- the force applied is less than the lower limit -12- of the force profile. Thus according to the method described in this invention, at least one alarm signal will be generated at this point.

Additionally, this invention provides that different force profiles for specific actions will be stored in the controller. For example, in a particular embodiment, a force profile is stored for the action of the arm "withdrawing fluid from a bottle", "placing a needle in the syringe", etc. Each of these actions is regarded as a sequence of movements which require that the force applied by the robotic arm lies within specific limits for each action, given that more force is required to perforate a bottle than for example fitting a needle.

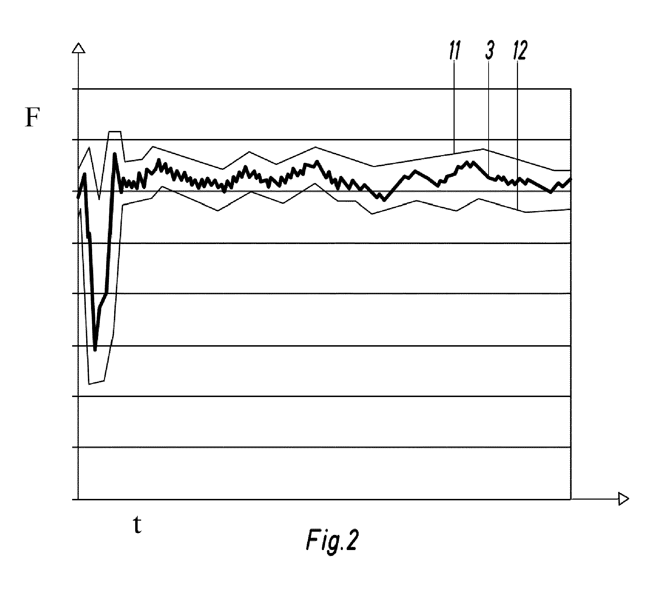

Figure 2 shows a second force measurement -3- for the action whose profile was previously defined in Figure 1. In this case, it will be seen that force -3- between the upper limit -11- and lower limit -12- of the force profile applies throughout the entire action, and as a consequence it can be concluded in this case that the robotic arm has performed the specific action by applying the expected forces throughout the entire sequence of movements.

Although the invention has been described with respect to preferred embodiments, these must not be regarded as limiting the invention, which will be defined through the broadest interpretation of the following claims.

## Claims

1. A method for controlling the action of a robotic arm **characterised in that** it comprises the following stages:
a) moving the robotic arms by means of a programmed action in a controller;
b) measuring the force which the robotic arm applies at particular points in the movement in stage a);
c) comparing the force exerted at each of the points in stage b) with force profile data stored in the controller;
d) as a result of the comparison in item c) generating an alarm signal if the force measured in stage b) is outside the limits defined in the force profile and performing stage a) if the force measured in stage b) lies within the limits defined in the force profile.

2. A method according to claim 1, in which the force profile comprises at least the maximum and/or minimum force which the robotic arm may apply at a series of points.

3. Method according to either of the preceding claims, **characterised in that** the alarm signal generated in stage b) stops movement of the robotic arm.

4. A method according to any one of the preceding claims, **characterised in that** the controller comprises a plurality of force profiles for different types of movement.

5. A robotic arm comprising a controller in which a series of movements are stored, a graphic interface for selection of the sequence of movements which has to be performed and means to measure the force applied by the arm, **characterised in that** the controller comprises a memory in which different force profiles for specific movements are stored.

6. A robotic arm according to claim 5, **characterised in that** the force profiles comprise at least data for the maximum and/or minimum force which has to be applied at specific points.

7. A robotic arm according to either of claims 5 or 6, **characterised in that** it comprises a system for stopping movements which is activated by means of an alarm signal.

8. A robotic arm according to claim 7, **characterised in that** the alarm signal is activated by means of a comparator which compares data for the force applied with force data in the force profiles.

9. A robotic arm **characterised in that** it implements a method according to any one of claims 1 to 5.
